(19) Europäisches Patentamt
European Patent Office
Office européen des brevets

(11) **EP 4 752 592 A1**

(12) **EUROPEAN PATENT APPLICATION**

(43) Date of publication:
**03.06.2026 Bulletin 2026/23**

(21) Application number: 25217600.3

(22) Date of filing: **21.11.2025**

(51) International Patent Classification (IPC):
**G01S 7/295** (2006.01)    **G01S 7/40** (2006.01)
**G01S 13/87** (2006.01)    **G01S 13/931** (2020.01)
**G01S 13/89** (2006.01)

(52) Cooperative Patent Classification (CPC):
**G01S 7/403; G01S 7/2955; G01S 13/87;
G01S 13/89; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 KR 20240175054**

(71) Applicant: **bitsensing Inc**
**Seongnam-si, Gyeonggi-do 13105 (KR)**

(72) Inventor: **CHAE, Young Hwan**
**13105 Seongnam-si, Gyeonggi-do (KR)**

(74) Representative: **BCKIP Part mbB**
**MK1**
**Landsbergerstraße 98, 3.Stock**
**80339 München (DE)**

(54) **DEVICE AND METHOD FOR DERIVING CORRECTION VALUE FOR VEHICLE RADAR**

(57)    A device for deriving a vehicle radar correction value includes a data collection unit configured to transmit radar signals through a plurality of radars installed in a vehicle, receive radar signals reflected from objects located around the vehicle, and generate radar data based on the received radar signals; a distribution information derivation unit configured to derive distribution information by inputting the radar data into a distribution model; and a correction value derivation unit configured to derive a correction value for the plurality of radars based on an overlapping field-of-view (FOV) range between at least two of the plurality of radars and the distribution information.

EP 4 752 592 A1

Description

CROSS-REFERENCE TO RELATED APPLICATION

This application claims the benefit of Korean Patent Application No. 10-2024-0175054 filed on Nov. 29, 2024, with the Korean Intellectual Property Office.

TECHNICAL FIELD

The present disclosure relates to a device and method for deriving a correction value for a radar installed in a vehicle.

BACKGROUND

An autonomous vehicle utilizes various sensors to sense the surrounding environment of the vehicle and to plan a driving path based on the sensed information. Among these sensors, a radar serves as a sensor critical for autonomous driving systems since it is robust against environmental changes and performs core functions, such as obstacle detection. In particular, a vehicle radar provides information regarding the front, rear, sides, and blind spots of the vehicle to help the systems accurately recognize the surrounding environment of the vehicle. Using such radar data, the vehicle may sense surrounding vehicles, pedestrians, and obstacles and make decisions for safe driving accordingly.

However, the installation position or orientation of the vehicle radar may become misaligned due to external impacts, vehicle vibrations, or collisions during driving. Such changes in position and orientation significantly affect radar performance, which may result in a decrease in accuracy and cause false detection or missed detection. In particular, since an autonomous driving system operates by fusing data from a plurality of radars and sensors, an error in the position or orientation of any individual radar may result in inconsistencies with data from other sensors. This can degrade the reliability of functions, such as obstacle detection and object tracking, thereby reducing the stability of the entire autonomous driving system.

In conventional technology, a manual adjustment method has generally been used to correct the position and orientation of a vehicle radar. However, this manual adjustment method heavily relies on skilled expertise and requires highly precise work, which leads to considerable time consumption and cost. Furthermore, it is difficult to respond in real time to subtle positional shifts or environmental changes that occur during driving. Such a manual alignment approach is inefficient in terms of time and efficiency since the vehicle must visit a service center in order to perform the alignment process.

SUMMARY

In view of the foregoing, the present disclosure is conceived to provide a correction value derivation device that corrects an error in the position or orientation of a vehicle radar mounted on a vehicle based on radar data.

Also, the present disclosure is conceived to provide a correction value derivation device that derives precise correction values by analyzing patterns of radar data and comparing gradient information in overlapping field-of-view (FOV) regions among radars.

Further, the present disclosure is conceived to provide a correction value derivation device that can automatically perform position and orientation correction even during driving, thereby suppressing degradation of radar performance caused by external impacts or environmental changes.

Furthermore, the present disclosure is conceived to provide a correction value derivation device that derives correction values for a vehicle radar and enables accurate recognition of the positions of surrounding objects without physically correcting the radar by preprocessing coordinate values of the surrounding objects detected by the radar using the correction values.

Moreover, the present disclosure is conceived to provide a correction value derivation device that greatly enhances the reliability of obstacle detection and environment perception of an autonomous vehicle by accurately calculating global coordinates of objects around the vehicle using corrected radar data.

The problems to be solved by the present disclosure are not limited to the above-described problems. There may be other problems to be solved by the present disclosure.

According to an exemplary embodiment, a device for deriving a vehicle radar correction value may include a data collection unit configured to transmit radar signals through a plurality of radars installed in a vehicle, receive radar signals reflected from objects located around the vehicle, and generate radar data based on the received radar signals; a distribution information derivation unit configured to derive distribution information by inputting the radar data into a distribution model; and a correction value derivation unit configured to derive a correction value for the plurality of radars based on an overlapping field-of-view (FOV) range between at least two of the plurality of radars and the distribution information.

This summary is provided by way of illustration only and should not be construed as limiting in any manner. Besides the above-described exemplary embodiments, there may be additional exemplary embodiments that become apparent by reference to the drawings and the detailed description that follows.

According to an embodiment of the present disclosure, it is possible to accurately analyze radar data and clearly recognize patterns of the surrounding environment of a vehicle.

According to the present disclosure, it is possible to enable real-time software-based correction of errors in the position and orientation of a vehicle radar mounted on the vehicle based on radar data.

According to the present disclosure, it is possible to derive correction values for a vehicle radar and enable accurate recognition of the positions of surrounding objects without physically correcting the radar by preprocessing coordinate values of the surrounding objects detected by the radar using the correction values.

According to the present disclosure, it is possible to derive precise correction values by analyzing patterns of radar data and comparing gradient information in overlapping field-of-view (FOV) regions among radars.

According to the present disclosure, it is possible to automatically perform position and orientation correction even during driving, thereby suppressing degradation of radar performance caused by external impacts or environmental changes.

According to the present disclosure, it is possible to greatly enhance the reliability of obstacle detection and environment perception of an autonomous vehicle by accurately calculating global coordinates of objects around the vehicle using corrected radar data.

## BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

FIG. 1 is a configuration diagram of a vehicle radar correction value derivation device according to an embodiment of the present disclosure.

FIG. 2 illustrates an example of radar data generated by a data collection unit according to an embodiment of the present disclosure.

FIG. 3 illustrates an example of distribution information generated based on radars located on a front-left side and a front-right side among vehicle radars according to an embodiment of the present disclosure.

FIG. 4 illustrates an example of gradient values on the distribution information according to an embodiment of the present disclosure.

FIG. 5 illustrates an example of field-of-views (FOVs) of four radars installed in a vehicle and overlapping FOV ranges according to an embodiment of the present disclosure.

FIG. 6 illustrates a process of deriving a correction value from an FOV of a vehicle radar according to an embodiment of the present disclosure.

FIG. 7 is a flowchart showing a method for deriving vehicle radar correction values according to an embodiment of the present disclosure.

## DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Throughout this document, the term "connected to" may be used to designate a connection or coupling of one element to another element and includes both an element being "directly connected" another element and an element being "electronically connected" to another element via another element. Further, it is to be understood that the term "comprises or includes" and/or "comprising or including" used in the document means that one or more other components, steps, operation and/or the existence or addition of elements are not excluded from the described components, steps, operation and/or elements unless context dictates otherwise; and is not intended to preclude the possibility that one or more other features, numbers, steps, operations, components, parts, or combinations thereof may exist or may be added.

Throughout this document, the term "unit" includes a unit implemented by hardware and/or a unit implemented by software. As examples only, one unit may be implemented by two or more pieces of hardware or two or more units may be implemented by one piece of hardware.

In the present specification, some of operations or functions described as being performed by a device may be performed by a server connected to the device. Likewise, some of operations or functions described as being performed by a server may be performed by a device connected to the server.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein.

In the disclosure, the circuitry, units, or means are hardware that carry out or are programmed to perform the recited functionality. The hardware may be any hardware disclosed herein or otherwise known which is programmed or configured to carry out the recited functionality.

When the hardware is a processor which may be considered a type of circuitry, the circuitry, means, or units are a combination of hardware and software, the software being used to configure the hardware and/or processor.

Hereinafter, embodiments of the present disclosure will be described in detail with reference to the accompanying drawings. However, the present disclosure may not be limited to these implementations, examples, and drawings.

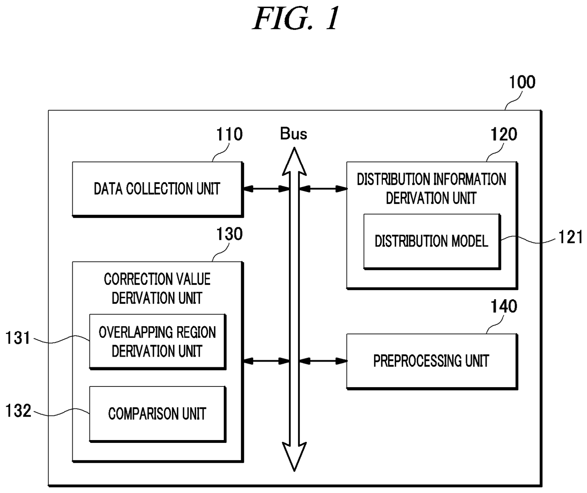

FIG. 1 is a configuration diagram of a vehicle radar correction value derivation device according to an embodiment of the present disclosure.

Referring to FIG. 1, a vehicle radar correction value derivation device 100 may include a data collection unit 110, a distribution information derivation unit 120, a correction value derivation unit 130, and a preprocessing unit 140.

The data collection unit 110 may include vehicle radars that can be installed at various positions, such as the front, rear, and sides of a vehicle. Particularly, the data collection unit 110 may serve as corner radars installed at corner portions of the vehicle. For example, the corner radars may be installed on the front-left, front-right, rear-left, and rear-right sides of the vehicle, configured to precisely sense the surrounding environment of the vehicle and generate radar data based on signals reflected from surrounding objects.

In the following description, a plurality of radars installed in the vehicle will be described under the assumption of four radars located on the front-left (FL), front-right (FR), rear-left (RL), and rear-right (RR) sides of the vehicle. However, the installation positions or number of radars may vary depending on the type or configuration of the vehicle.

As shown in FIG. 1, the radar data generated by the data collection unit 110 may be processed by the distribution information derivation unit 120, the correction value derivation unit 130, and the preprocessing unit 140 included in the vehicle radar correction value derivation device 100. These components may be integrated into a single device or may be implemented as physically separate units depending on the embodiment. For example, the data collection unit 110 may be located within the vehicle, while the distribution information derivation unit 120, the correction value derivation unit 130, and the preprocessing unit 140 may be implemented in an external server.

Such a separated configuration enables efficient processing of large-scale data while saving the computing resources of the vehicle. In particular, when processing is performed by the external server, radar data collected from the data collection unit 110 may be transmitted to the server through a communication network. Further, distribution information derivation, correction value calculation, and global coordinate computation may be performed in the server, and the results may be returned to the vehicle.

Accordingly, the present disclosure provides flexibility in both the installation of the data collection unit 110 and data processing implementation, enabling adaptive application based on the design and intended use of the vehicle.

The vehicle radar correction value derivation device 100 may include: the data collection unit 110 configured to transmit signals through a plurality of radars installed in the vehicle, receive radar signals reflected from surrounding objects located around the vehicle, and generate radar data based on the received radar signals; the distribution information derivation unit 120 configured to derive distribution information by inputting the radar data into a distribution model; and the correction value derivation unit 130 configured to derive correction values for the plurality of radars based on an overlapping FOV range between at least two radars among the plurality of radars and the distribution information.

Herein, the radar data may be expressed as point cloud data.

The radar data may include information on azimuth and range with respect to the radar, and the data collection unit 110 may convert the radar data into an orthogonal coordinate system.

The distribution information derivation unit 120 may derive the distribution information using an Expectation-Maximization (EM) algorithm on the radar data.

A distribution model 121 of the distribution information derivation unit 120 may establish a plurality of clusters and derive a responsibility value that indicates the probability of the radar data belonging to at least one of the clusters.

The distribution model 121 may update a weight, a mean, and a covariance matrix of the clusters based on the responsibility values.

The distribution model 121 may repeat derivation of the responsibility values and updating of the clusters, and may derive a converged result as the distribution information.

The distribution information derivation unit 120 may derive gradient values in the distribution model for each data point based on the distribution information, and the correction value derivation unit 130 may derive the correction values based on the gradient values.

The correction value derivation unit 130 may include: an overlapping region derivation unit 131 configured to derive an overlapping region between a first radar and a second radar based on predetermined FOVs of the respective radars; and a comparison unit 132 configured to select a random overlapping point among data points in the overlapping region and to derive a correction value by comparing gradient values in the distribution information for the first radar and the second radar with respect to the overlapping point.

Herein, the comparison unit 132 may derive the correction value based on a difference between the gradient values for the first radar and the second radar with respect to the overlapping point.

The correction value derivation unit 130 may select one of the plurality of radars as a reference radar and derive a correction value for another radar among the plurality of radars, and may repeat a process of deriving a correction value for another radar using the reference radar for which a correction value has already been derived.

The correction value derivation unit 130 may select a first radar among the plurality of radars, select a second radar among the other radars having an overlapping FOV with the first radar, and derive a correction value for the second radar based on the first radar.

The correction value derivation unit 130 may select a third radar among the other radars having an overlapping FOV with the second radar, and derive a correction value for the third radar based on the second radar.

The correction values may include a position correction value and an azimuth correction value for the radar.

The preprocessing unit 140 may generate corrected radar data by applying the correction values to radar data generated for each radar.

The preprocessing unit 140 may generate the corrected radar data by converting coordinate values of the radar data into global coordinate values reflecting the correction values.

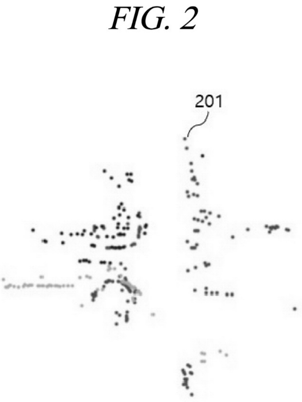

**FIG. 2** illustrates an example of radar data generated by a data collection unit according to an embodiment of the present disclosure. Referring to **FIG. 2,** radar data collected from different radars mounted on the vehicle are represented in the form of point cloud data.

Point cloud data represent the positions of objects around the vehicle in the form of coordinate data based on radar signals reflected from the objects. The point cloud data consist of individual data points indicating position information of objects sensed by each radar mounted on the vehicle. **FIG. 2** illustrates an example in which data generated from different radars are represented by different marker shapes (*e.g.*, circles, triangles, squares, and asterisks). For example, data generated by the front-left radar, front-right radar, rear-left radar, and rear-right radar are respectively represented as points of different shapes.

The point cloud data indicate the relative positions of sensed objects in a local coordinate system based on the vehicle's position and orientation, and may be interpreted in an integrated coordinate system aligned according to the installation positions and angles of the vehicle radars. The point cloud data provide important information for recognizing object positions, identifying patterns in the vehicle's surrounding environment, and ensuring data consistency among radars.

Hereinafter, the radar data generated by the collection unit are in the form of point cloud data, and each point constituting the radar data is defined as point data.

The data collection unit converts range (r) data and azimuth (θ) data received from the vehicle radars from a local polar coordinate system to a local Cartesian coordinate system to compute the positions of the objects sensed by the radars. This conversion is performed based on the following equations:

<Equation 1>

$$x_{\text{local}} = r \cdot \cos(\theta)$$

<Equation 2>

$$y_{\text{local}} = r \cdot \sin(\theta)$$

In Equations 1 and 2, r is the range (radius) from the radar to the object, and θ is the azimuth measured with respect to the radar. Through the above equations, the data collection unit converts the positions of surrounding objects located around the vehicle into a Cartesian coordinate system ($x_{\text{local}}, y_{\text{local}}$). The converted coordinates may be represented as respective cloud point data.

<Equation 3>

$$s_m = \begin{bmatrix} x_{\text{local}}, y_{\text{local}} \end{bmatrix}$$

Each point may be represented as in Equation 3. Herein, m denotes the index of a collected point, and a total of M data samples may be included in the conversion process.

This conversion process clearly represents the relative positions of objects sensed by the radars and supports subsequent integration and analysis of data among the radars. In particular, the conversion from the local polar coordinate system to the local Cartesian coordinate system improves data consistency and enhances the accuracy of the data required to derive correction values for vehicle radars.

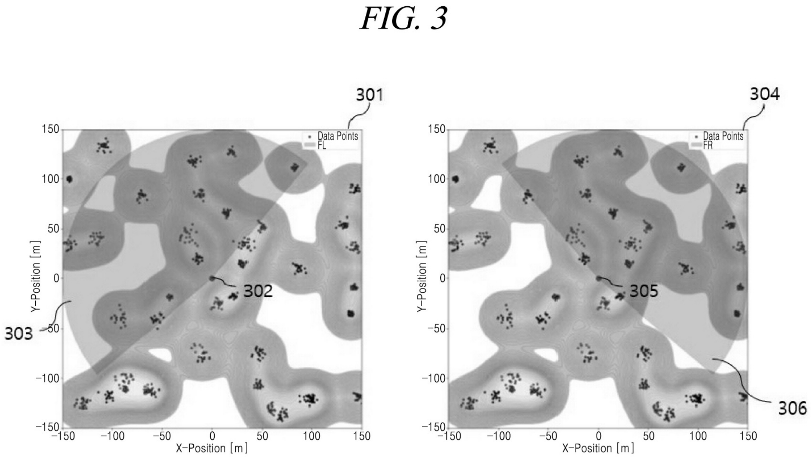

**FIG. 3** illustrates an example of distribution information generated based on radars located on a front-left (FL) side and a front-right (FR) side among vehicle radars according to an embodiment of the present disclosure.

The distribution information of **FIG. 3** may be generated by inputting the radar data into a distribution model by the distribution information derivation unit. The distribution model is exemplified as a Gaussian Mixture Model (GMM), and converts the radar data into GMM-based distribution information using an EM algorithm. Accordingly, data sensed by each radar are organized into clusters, allowing the density and distribution characteristics of the data to be modeled.

A first distribution information result 301 in **FIG. 3** shows an example of a reference position 302 and an FOV 303 of the front-left radar. Similarly, a second distribution-information result 304 in **FIG. 3** shows a reference position 305 and an FOV 306 of the front-right radar.

Black dots in the distribution information results represent point cloud data sensed by the radars, and each dot corresponds to radar data indicating an object's position. **FIG. 3** represents local information sensed by the front-left and front-right radars using a GMM based on the point cloud data. In the drawings, density values of the data are visualized, and, thus, the positions and density characteristics of clusters can be identified.

The distribution information derivation unit may perform the EM algorithm on the radar data to derive distribution information. The EM algorithm consists of the following two processes.

In an expectation process, a responsibility value, *i.e.,* the probability of each data point belonging to a specific cluster, is computed. The responsibility value is calculated as in the following equation.

<Equation 4>

$$\gamma_{m,i} = \frac{\pi_i \mathcal{N}(s_m | \mu_i, \Sigma_i)}{\sum_{k=1}^{N} \pi_k \mathcal{N}(s_m | \mu_k, \Sigma_k)}$$

In Equation 4, πi denotes a weight for a cluster i, and $N(s_m, \mu_i, \Sigma_i)$ may denote the probability of a data point $s_m$ belonging to a multivariate Gaussian distribution with a mean $\mu_i$ and a covariance matrix $\Sigma_i$.

The responsibility value is defined as $\gamma_{m,i}$ and indicates the probability of the data point $s_m$ belonging to the cluster i. The initial weight $\pi_i$ may be set to 1/N, the mean $\mu_i$ may be initialized with random point cloud data samples, and the covariance matrix $\Sigma_i$ may be initialized as an identity matrix.

Thereafter, in a maximization process, the distribution information derivation unit may update parameters (weight $\pi_i$, mean $\mu_i$, and covariance matrix $\Sigma_i$) of each cluster using the following equations.

<Equation 5>

$$\pi_i = 1/M \sum_{m=1}^{M} \gamma_{m,i}$$

<Equation 6>

$$\mu_i = \frac{\sum_{m=1}^{M} \gamma_{m,i} s_m}{\sum_{m=1}^{M} \gamma_{m,i}}$$

<Equation 7>

$$\Sigma_i = \frac{\sum_{m=1}^{M} \gamma_{m,i}(s_m - \mu_i)(s_m - \mu_i)^T}{\sum_{m=1}^{M} \gamma_{m,i}}$$

In Equations 5 to 7, M denotes the number of data points in the point cloud data, and $\gamma_{m,i}$ may denote the responsibility value. Herein, the responsibility value indicates the probability of the data point $s_m$ belonging to the cluster i.

The distribution information derivation unit may repeatedly perform the expectation process and the maximization process to derive a final GMM when the parameters of each cluster converge. The GMM represents a probability density function for the entire data as follows:

<Equation 8>

$$p(s) = \sum_{i=1}^{N} \pi_i \mathcal{N}(s|\mu_i, \Sigma_i)$$

In Equation 8, the probability density function p(s) for the entire data may denote the probability density of a specific data point s appearing in the whole data space, and may be derived based on the weight $\pi_i$, mean $\mu_i$, and covariance matrix $\Sigma_i$.

The derived GMM is applied to each corner radar of the vehicle, thereby enabling analysis of distribution information of data sensed by each radar.

<Equation 9>

$$p_{\text{FR}}(s), p_{\text{FL}}(s), p_{\text{RR}}(s), p_{\text{RL}}(s)$$

In Equation 9, $p_{FR}(s)$ denotes a probability density function for the front-right radar, $p_{FL}(s)$ denotes a probability density function for the front-left radar, $p_{RR}(s)$ denotes a probability density function for the rear-right radar, and $p_{RL}(s)$ denotes a probability density function for the rear-left radar.

The distribution information derived through the above process is used to ensure data consistency among radars and to compute position and orientation correction values for the radars.

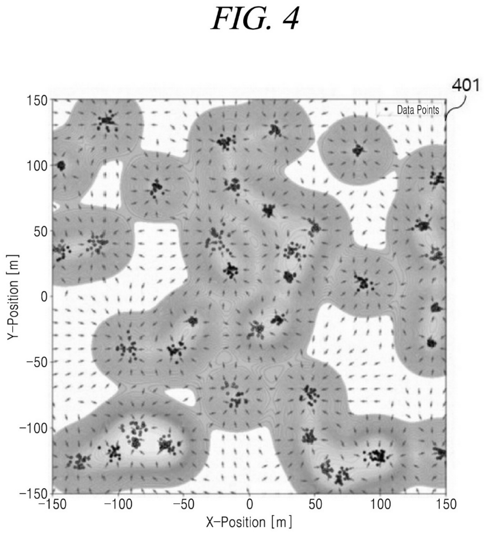

**FIG. 4** illustrates an example of gradient values on the distribution information according to an embodiment of the present disclosure.

Based on the distribution information derived in the preceding process, the distribution information derivation unit calculates a gradient value within the distribution model for each data point. In this process, a gradient is calculated on the grid of the GMM, thereby enabling derivation of correction values for correcting the position and orientation of the radar.

Distribution information 401 of **FIG. 4** is generated based on the density and distribution of data points sensed by the radars. The distribution information 401 indicates, with arrows, gradient directions measured at respective coordinates. These arrows visually show the direction of change in data density, indicating a tendency from a region of higher density toward a region of lower density.

Such gradient values are used to ensure data consistency among radars and to precisely correct their positions and orientations. In particular, relative position and orientation errors of the radars can be effectively corrected by analyzing patterns occurring in overlapping regions among the radars, based on the gradient information.

**FIG. 4** illustrates a process of deriving gradient values at respective coordinates based on the distribution information by the distribution information derivation unit.

The distribution information derivation unit uses the GMM to calculate the gradient for each data point of the distribution information. The gradient calculation process is as follows.

A gradient vector $\nabla_s p(s)$ for a specific coordinate s of the distribution information is calculated as in the following equation.

<Equation 10>

$$\nabla_s p(s) = \sum_{i=1}^{N} \pi_i \nabla_s \mathcal{N}(s|\mu_i, \Sigma_i)$$

In Equation 10, p(s) denotes a probability density function for the entire distribution model, $\pi_i$ denotes a weight for the cluster i, $N(s|\mu_i, \Sigma_i)$ denotes a multivariate Gaussian probability density function for the cluster i, and $\nabla_s$ denotes a gradient operation at s.

The gradient of multivariate Gaussian distribution is calculated as follows:

<Equation 11>

$$\nabla_s \mathcal{N}(s|\mu_i, \Sigma_i) = \mathcal{N}(s|\mu_i, \Sigma_i)\Sigma_i^{-1}(s - \mu_i)$$

According to Equation 11, the gradient at the specific coordinate s is computed by combining the relationships among the weight $\pi_i$ of each cluster, the probability density $N(s|\mu_i, \Sigma_i)$, the covariance matrix $\Sigma_i$, and the central coordinates.

The following equation can be obtained by substituting Equation 11 into Equation 10.

<Equation 12>

$$\nabla_s p(s) = \sum_{i=1}^{N} \pi_i \mathcal{N}(s|\mu_i, \Sigma_i)\Sigma_i^{-1}(s - \mu_i)$$

Through Equation 12, the size of the gradient vector at the specific coordinate s is $2 \times 1$. Through this process, the distribution information derivation unit may derive a gradient value at a specific coordinate.

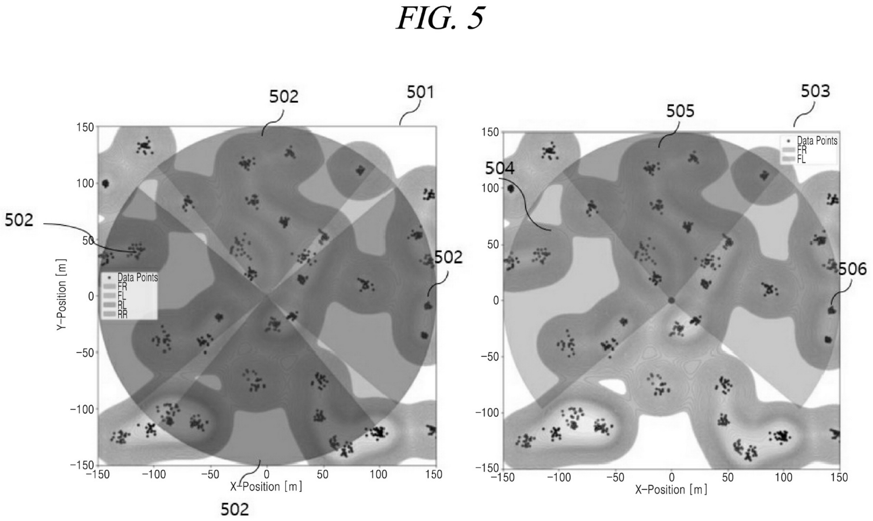

FIG. 5 illustrates an example of FOVs of four radars installed in a vehicle and overlapping FOV ranges according to an embodiment of the present disclosure.

A left diagram 501 of **FIG. 5** shows the respective FOVs of the front-right (FR) radar, front-left (FL) radar, rear-right (RR) radar, and rear-left (RL) radar installed in the vehicle, and overlapping FOV ranges 502 among them. The FOV of each corner radar is assumed to be $\pm 85°$, and the total FOV sensible by each radar mounted on the vehicle is 170°. Since four radars are installed at the corners of the vehicle, the total FOV is 680°. However, the 320° FOV, which exceeds a full 360° circle, corresponds to overlapping FOV regions among the radars. These overlapping regions are the primary focus of analysis for ensuring radar data consistency and deriving correction values.

In particular, for the FL and FR radars, the overlapping FOV regions correspond to 80° on the left side of the FR radar and 80° on the right side of the FL radar. These overlapping regions play an important role in accurately recognizing objects around the vehicle and performing position and orientation corrections among the radars.

A right diagram 503 of **FIG. 5** emphasizes an FOV 506 of the FR radar and an FOV 504 of the FL radar. This diagram more clearly shows the overlapping FOV range 506 between the two radars and explains that the positions and orientations among the radars can be corrected by comparing patterns of radar data in this overlapping range.

Accordingly, **FIG. 5** visually shows a process of utilizing data in an overlapping FOV range to ensure data consistency among radars and to precisely recognize the surrounding environment of the vehicle. Analysis of data in this overlapping region serves as a key factor in improving the precision of radar position and orientation correction.

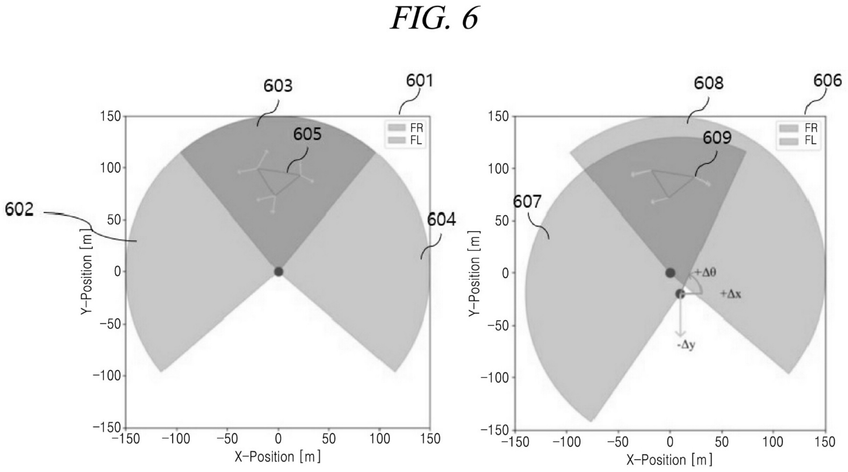

**FIG. 6** illustrates a process of deriving a correction value from an FOV of a vehicle radar according to an embodiment of the present disclosure.

A left diagram 601 of **FIG. 6** shows an FOV 602 of the FL radar, an FOV 604 of the FR radar, and an overlapping FOV range 603 where the FOVs of the two radars overlap. The correction value derivation unit selects an arbitrary overlapping point 605 within the overlapping FOV range 603, and computes gradient values for the overlapping point 605 on the distribution information derived from each radar. Then, the correction value derivation unit derives correction values with respect to the FR radar as a reference in order to minimize a gradient value error between the RL radar and the FR radar for the overlapping point 605.

A right diagram 606 of **FIG. 6** shows an example of a result obtained after the correction value derivation unit applies the correction values derived from the left diagram 601. As a result of applying the correction values, an FOV 607 of the FL radar, an FOV 608 of the FR radar, and an overlapping FOV range 609 are adjusted. This is because, in the process of minimizing the gradient value error between the radars, the correction value derivation unit adjusts the position and azimuth of each radar. In the drawings, the amounts of change in the adjusted position and azimuth (+$\Delta$x, -$\Delta$y, +$\Delta\theta$) are visually indicated, and these changes are reflected in the correction values.

Accordingly, **FIG. 6** specifically shows the process of deriving accurate correction values by adjusting the position and azimuth of the radar based on gradient information of data within the overlapping FOV range by the vehicle radar correction value derivation device. These correction values ensure data consistency among radars and contribute to more accurate recognition of the vehicle's surrounding environment.

The correction value derivation unit may set one of two radars with overlapping FOVs as a reference, randomly select K number of radar data from that radar, and calculate the coordinate gradient values of the selected radar data. Thereafter, position and orientation correction between the two radars is performed by matching the gradient values calculated for the same coordinates from the other radar.

The correction value derivation unit may derive, as correction values, a position correction value $\Delta$s and an azimuth correction value $\Delta\theta$ for a radar. Herein, since the position correction value can be expressed separately as a change in the x-axis direction ($\Delta$x) and a change in the y-axis direction ($\Delta$y), a total of three correction variables need to be obtained for one radar.

The vehicle radars may be configured with, for example, four corner radars. When one of the radars is set as a reference radar, the positions and orientations of the other three radars need to be corrected. Accordingly, the total number of correction variables to be obtained by the correction value derivation unit amounts to nine.

Hereinafter, the process of deriving correction values by the correction value derivation unit will be explained using an example in which the first radar (FR radar) is used as the reference to correct the second radar (FL radar).

Assuming that the maximum FOVs of the FR and FL radars is 170°, the overlapping range between the radars corresponds to [-85°, -5°] of the FR radar and [5°, 85°] of the FL radar. K number of overlapping points may be randomly selected in this overlapping region to compare gradient values. In this case, the overlapping points selected by the correction value derivation unit may be set such that the Euclidean distance between coordinates is maintained at 5 m or greater in order to ensure numerical stability.

In a global coordinate system, the angle of the FR radar is assumed to be 45°, and the angle of the FL radar is set to -45°. Further, the initial positions of all radars are set to [0, 0]. Based on these initial settings, the position and orientation of the FL radar may be adjusted to minimize the error between the gradient values calculated in the overlapping region.

The variables to be corrected for the FL radar are the position correction value $\Delta$s = [$\Delta$x, $\Delta$y] and the azimuth correction value $\Delta\theta$. The equation therefor is as follows.

<Equation 13>

$$\arg \min_{\Delta\theta, \Delta s} \sum_{k=1}^{K} (\nabla_s p_{FR}(s_{k,FR}) - \nabla_s p_{FL}(s_{k,FL}))^2$$

In Equation 13, the coordinates of $S_{k,FR}$ and $S_{k,FL}$ may be derived as follows. Herein, $S_{k,FR}$ denotes the reference angle of the FR radar, and $S_{k,FL}$ may denote the coordinates calculated from the corrected angle and position of the FL radar.

<Equation 14>

$$s_{k,FR} = s_k R(\theta_{init,FR}) = s_k R(45°)$$

<Equation 15>

$$s_{k,FL} = (s_k + \Delta s)R(\theta_{init,FL} + \Delta\theta) = (s_k + \Delta s)R(-45° + \Delta\theta)$$

In Equations 14 and 15, R(·) denotes a rotation matrix. Through these equations, the position and orientation of the FL radar can be adjusted to minimize a gradient error.

This process may be performed using optimization techniques, such as a gradient descent algorithm, based on the continuity of the GMM density function. With initial values set to $\Delta\theta = 0$ and $\Delta s = [0, 0]$, an optimization algorithm is iterated to derive an azimuth correction value $\Delta\theta^*$ and a position correction value $\Delta s^*$. These optimal correction values minimize a gradient error by adjusting the radar's position and orientation. In the above equations, $\theta_{init}$ denotes the initial radar installation angle, and $\Delta\theta = 0$ denotes the initial correction angle. For reference, since the initial value $s_{init}$ of the installation position is set to $[0, 0]$ for all radars, it is omitted from the above equations.

Through the above-described process, the correction value derivation unit may generate a correction value for the second radar based on the first radar. Thereafter, the correction value derivation unit may generate a correction value for the third radar based on the second radar, and by repeating this process, correction values may be generated for all radars except the reference radar. In this case, after one reference radar is selected, another radar for which a correction value is to be generated may be selected as a radar having at least an FOV range overlapping with that of the reference radar.

For example, the correction value derivation unit may generate a correction value for the FL radar based on the FR radar, generate a correction value for the RL radar based on the FL radar, and then generate a correction value for the RR radar based on the RL radar. Based on this example, the process of deriving a correction value for each radar by the correction value derivation unit will be described.

The correction value derivation unit defines, as a loss, the sum of squared differences between gradient values among GMM density functions of the distribution information, and the following equations may be used to derive optimal correction values that minimize a total loss $L_{total}$. Herein, the correction values include an azimuth correction value $\Delta\theta^*$ and a position correction value $\Delta s^*$.

<Equation 16>

$$L_{FL} = \sum_{k=1}^{K} (\nabla_s p_{FR}(s_{k,FR}) - \nabla_s p_{FL}(s_{k,FL}))^2$$

<Equation 17>

$$L_{RL} = \sum_{q=1}^{Q} (\nabla_s p_{FL}(s_{q,FL}) - \nabla_s p_{RL}(s_{q,RL}))^2$$

<Equation 18>

$$L_{RR} = \sum_{r=1}^{R} (\nabla_s p_{RL}(s_{r,RL}) - \nabla_s p_{RR}(s_{r,RR}))^2$$

<Equation 19>

$$L_{total} = L_{FL} + L_{RL} + L_{RR}$$

<Equation 20>

$$\Delta\Theta = \{\Delta\theta_{FL}, \Delta\theta_{RL}, \Delta\theta_{RR}\}$$

<Equation 21>

$$\Delta S = \{\Delta s_{FL}, \Delta s_{RL}, \Delta s_{RR}\}$$

<Equation 22>

$$\Delta\Theta^*, \Delta S^* = \arg\min_{\Delta\Theta,\Delta S} L_{total}$$

In Equations 16 to 22, initial values of $\Delta\theta^*$ and $\Delta s^*$ may be set to 0. The initial installation angles of the respective radars may be set as follows: $\theta_{init,FR} = 45°$, $\theta_{init,FL} = -45°$, $\theta_{init,RL} = -135°$, and $\theta_{init,RR} = 135°$.

The preprocessing unit may generate corrected radar data by applying correction values to radar data generated for each radar.

More specifically, the preprocessing unit may generate corrected radar data by converting coordinate values of the radar data into global coordinate values reflecting the correction values.

The preprocessing unit may convert the radar data into a global coordinate system by reflecting the correction values for each radar. Assuming that the initial installation position $s_{init}$ is [0, 0], the coordinates after correction of the positions and azimuths of the respective radars may be expressed as in the following equations. In the following equations, since the FR radar is the reference radar, its position and azimuth correction values are assumed to be zero.

<Equation 23>

$$x_{radar} = x_{init} + \Delta x = \Delta x$$
$$y_{radar} = y_{init} + \Delta y = \Delta y$$
$$\theta_{radar} = \theta_{init} + \Delta\theta$$

Through Equations 23 and 24, surrounding objects in the local coordinate system may be converted to the global coordinate system based on the corrected azimuths and positions of the respective radars.

<Equation 24>

$$x_{rotated} = x_{local} \cdot \cos(\theta_{radar}) - y_{local} \cdot \sin(\theta_{radar})$$
$$y_{rotated} = x_{local} \cdot \sin(\theta_{radar}) + y_{local} \cdot \cos(\theta_{radar})$$

<Equation 25>

$$x_{global} = x_{radar} + x_{rotated}$$
$$y_{global} = y_{radar} + y_{rotated}$$

In Equations 23 to 25, $x_{radar}$ denotes a position correction value in the x-axis for a radar, $y_{radar}$ denotes a position correction value in the y-axis for the radar, and $\theta_{radar}$ denotes an azimuth correction value for the radar. Herein, $x_{init}$, $y_{init}$, and $\theta_{init}$ denote initial values of the correction values, respectively. Also, $x_{local}$ and $y_{local}$ denote a local coordinate system of an arbitrary data point. The values for $x_{local}$ and $y_{local}$ from an orthogonal coordinate system derived through Equations 1 to 3 may be used. That is, $x_{local}$ and $y_{local}$ may denote radar data generated by the data collection unit.

$x_{global}$ and $y_{global}$ denote a global coordinate system of an arbitrary data point reflecting the correction values. That is, $x_{global}$ and $y_{global}$ may denote corrected radar data generated by the preprocessing unit.

<Equation 26>

$$x_{global} = x_{radar} + x_{local} \cdot \cos(\theta_{radar}) - y_{local} \cdot \sin(\theta_{radar})$$
$$y_{global} = y_{radar} + x_{local} \cdot \sin(\theta_{radar}) + y_{local} \cdot \cos(\theta_{radar})$$

Equation 26 is derived by substituting Equation 25 into Equation 24. $X_{global}$ and $y_{global}$ derived through Equation 26 denote a global coordinate system of an arbitrary data point reflecting the correction values.

As described above, the preprocessing unit may generate corrected radar data by adding the coordinate values of the radar data, *i.e.*, point cloud data, generated by the data collection unit to the correction values derived by the correction value derivation unit.

The correction values are derived for each of the plurality of radars installed in the vehicle. Accordingly, the correction values derived for each radar are applied to the radar data generated by each radar to generate corrected radar data for each radar.

Based on the corrected radar data preprocessed by the preprocessing unit, surrounding objects around the vehicle can be recognized during driving. Therefore, even if the position or azimuth of a radar changes, accurate positions and orientations of the surrounding objects can still be recognized based on the correction values, without requiring manual adjustment or physical modification of the radar.

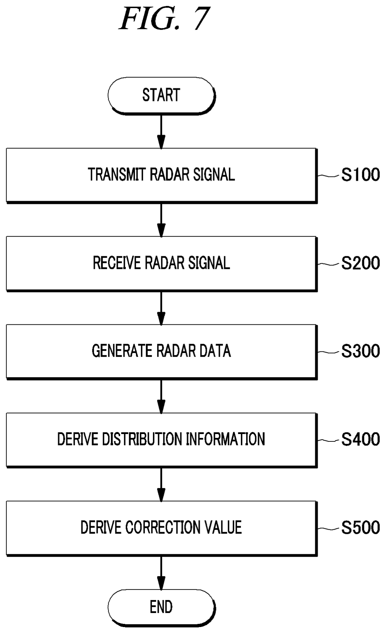

**FIG. 7** is a flowchart showing a method for deriving vehicle radar correction values according to an embodiment of the present disclosure.

The method illustrated in **FIG. 7** includes the processes time-sequentially performed according to the embodiment illustrated in **FIG. 1** to **FIG. 6.** Therefore, the descriptions omitted below may be referenced by the method performed by the device according to the embodiment illustrated in **FIG. 1** to **FIG. 6.**

Referring to **FIG. 7,** a method for deriving a vehicle radar correction value is performed by the vehicle radar correction value derivation device, and may include: a process S100 of receiving radar signals reflected from surrounding objects located around a vehicle and generating radar data based on the received radar signals; a process S200 of deriving distribution information by inputting the radar data into a distribution model; and a process S300 of deriving a correction value based on an overlapping FOV range between radars and the distribution information.

The method for deriving a vehicle radar correction value described above with reference to FIG. 1 to FIG. 7 can be implemented in a computer program stored in a medium to be executed by a computer or a storage medium including instructions codes executable by a computer. Also, the method for deriving a vehicle radar correction value described above with reference to FIG. 1 to FIG. 7 can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The method may be further divided into additional steps or combined into fewer steps through the embodiments described above with reference to FIGS. 1 to 7. In addition, some steps may be omitted as necessary, and the order of the steps may be changed.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

Explanation of codes

    100: VEHICLE RADAR CORRECTION VALUE DERIVATION DEVICE
    110: DATA COLLECTION UNIT
    120: DISTRIBUTION INFORMATION DERIVATION UNIT
    130: CORRECTION VALUE DERIVATION UNIT
    140: PREPROCESSING UNIT

**Claims**

1. A device for deriving a vehicle radar correction value, comprising:

a data collection unit configured to transmit radar signals through a plurality of radars installed in a vehicle, receive radar signals reflected from objects located around the vehicle, and generate radar data based on the received radar signals;
a distribution information derivation unit configured to derive distribution information by inputting the radar data into a distribution model; and
a correction value derivation unit configured to derive a correction value for the plurality of radars based on an overlapping field-of-view (FOV) range between at least two of the plurality of radars and the distribution information.

2. The device of Claim 1,
wherein the radar data are expressed as point cloud data.

3. The device of Claim 1,

wherein the radar data include information on azimuth and range with respect to the radar, and
the data collection unit is further configured to convert the radar data into an orthogonal coordinate system.

4. The device of Claim 1,
wherein the distribution information derivation unit is further configured to derive the distribution information using an Expectation-Maximization (EM) algorithm on the radar data.

5. The device of Claim 1,
wherein the distribution model establishes a plurality of clusters and derives a responsibility value that indicates a probability of the radar data belonging to at least one of the plurality of clusters.

6. The device of Claim 5,
wherein the distribution model updates a weight, a mean, and a covariance matrix of the cluster based on the responsibility value.

7. The device of Claim 6,
wherein the distribution model repeats the derivation of the responsibility value and the updating of the cluster, and derives a converged result as the distribution information.

8. The device of Claim 1,

wherein the distribution information derivation unit is further configured to derive a gradient value in the distribution model for each radar data based on the distribution information, and
the correction value derivation unit is further configured to derive the correction values based on the gradient value.

9. The device of Claim 1,
wherein the correction value derivation unit includes:
an overlapping region derivation unit configured to derive an overlapping region between a first radar and a second radar based on predetermined FOVs of the respective radars.

10. The device of Claim 9,
wherein the correction value derivation unit further includes:
a comparison unit configured to:

select a random overlapping point among the radar data in the overlapping region and
derive a correction value by comparing gradient values in the distribution information for the first radar and the second radar with respect to the overlapping point.

11. The device of Claim 10,

wherein the comparison unit is further configured to derive the correction value based on a difference between the gradient values for the first radar and the second radar with respect to the overlapping point.

12. The device of Claim 1,
wherein the correction value derivation unit is further configured to:

select one of the plurality of radars as a reference radar,
derive a correction value for another radar among the plurality of radars, and
repeat a process of deriving a correction value for another radar using the reference radar for which a correction value has already been derived.

13. The device of Claim 1,
wherein the correction value derivation unit is further configured to:

select a first radar among the plurality of radars,
select a second radar among the other radars having an overlapping FOV with the first radar, and
derive a correction value for the second radar based on the first radar.

14. The device of Claim 13,
wherein the correction value derivation unit is further configured to:

select a third radar among the other radars having an overlapping FOV with the second radar, and
derive a correction value for the third radar based on the second radar.

15. The device of Claim 1,
wherein the correction value includes a position correction value and an azimuth correction value for the radar.

## *FIG. 1*

FIG. 2

*FIG. 3*

## FIG. 4

FIG. 5

EP 4 752 592 A1

FIG. 6

# FIG. 7

START

TRANSMIT RADAR SIGNAL — S100

RECEIVE RADAR SIGNAL — S200

GENERATE RADAR DATA — S300

DERIVE DISTRIBUTION INFORMATION — S400

DERIVE CORRECTION VALUE — S500

END

Europäisches
Patentamt

European
Patent Office

Office européen
des brevets

# EUROPEAN SEARCH REPORT

**Application Number**

EP 25 21 7600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 665 501 B1 (ZOOX INC [US]) 27 November 2024 (2024-11-27) * paragraphs [0006], [0039], [0043], [0046], [0053] - [0055], [0060] - [0067], [0080] - [0107]; figures 1, 2, 4, 6-8 * | 1-15 | INV. G01S7/295 G01S7/40 G01S13/87 G01S13/931 G01S13/89 |
| X | US 2020/025873 A1 (KUBERTSCHAK TIM [DE] ET AL) 23 January 2020 (2020-01-23) * paragraphs [0023], [0024]; figures 1-4 * | 1-15 | |
| X | US 2019/154824 A1 (BILIK IGAL [IL] ET AL) 23 May 2019 (2019-05-23) * paragraphs [0047] - [0054]; figures 5,6 * | 1-15 | |
| A | US 2021/055399 A1 (HIRAMOTO KAZUKI [JP]) 25 February 2021 (2021-02-25) * paragraphs [0025] - [0031]; figures 1-3 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 10 March 2026 | Schmelz, Christian |

EPO FORM 1503 03.82 (P4C01)

## ANNEX TO THE EUROPEAN SEARCH REPORT
## ON EUROPEAN PATENT APPLICATION NO.

EP 25 21 7600

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2026

| Patent document cited in search report | | Publication date | Patent family member(s) | | Publication date |
|---|---|---|---|---|---|
| EP 3665501 | B1 | 27-11-2024 | CN | 111183370 A | 19-05-2020 |
| | | | CN | 117607841 A | 27-02-2024 |
| | | | EP | 3665501 A1 | 17-06-2020 |
| | | | EP | 4474870 A2 | 11-12-2024 |
| | | | JP | 7196156 B2 | 26-12-2022 |
| | | | JP | 7482978 B2 | 14-05-2024 |
| | | | JP | 2020530569 A | 22-10-2020 |
| | | | JP | 2023025266 A | 21-02-2023 |
| | | | WO | 2019032588 A1 | 14-02-2019 |
| US 2020025873 | A1 | 23-01-2020 | CN | 109804270 A | 24-05-2019 |
| | | | DE | 102016220075 A1 | 19-04-2018 |
| | | | EP | 3497476 A1 | 19-06-2019 |
| | | | US | 2020025873 A1 | 23-01-2020 |
| | | | WO | 2018069405 A1 | 19-04-2018 |
| US 2019154824 | A1 | 23-05-2019 | CN | 109799505 A | 24-05-2019 |
| | | | DE | 102018128738 A1 | 23-05-2019 |
| | | | US | 2019154824 A1 | 23-05-2019 |
| US 2021055399 | A1 | 25-02-2021 | CN | 112415502 A | 26-02-2021 |
| | | | JP | 7131508 B2 | 06-09-2022 |
| | | | JP | 2021032640 A | 01-03-2021 |
| | | | US | 2021055399 A1 | 25-02-2021 |

EPO FORM P0459

For more details about this annex : see Official Journal of the European Patent Office, No. 12/82

**EP 4 752 592 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175054